# EUROPÄISCHE PATENTSCHRIFT

(11) **EP 0 499 653 B1**
(45) Veröffentlichungstag und Bekanntmachung des Hinweises auf die Patenterteilung: **23.08.1995**
(21) Anmeldenummer: 91102228.3
(22) Anmeldetag: 16.02.1991
(51) Int. Cl.: G05B 19/18, G05B 19/4065, B24B 33/06

(54) **Maschine, insbesondere Honmaschine, zur messgesteuerten Bearbeitung von Werkstücken**
Machine, especially honing machine, for gauge controlled working of workpieces
Machine, en particulier de rodage, pour l'usinage contrôlé par commande de mesure de pièces

(43) Veröffentlichungstag der Anmeldung: 26.08.1992
(73) Patentinhaber: Maschinenfabrik Gehring GmbH & Co., D-73760 Ostfildern (DE)
(72) Erfinder: Lang, Ernst, W-7302 Ostfildern 1 (DE); Sauer, Uwe, W-7066 Baltmannsweiler (DE)
(74) Vertreter: Wasmuth, Rolf, Dipl.-Ing.

(56) Entgegenhaltungen:
- EP-A- 0 390 938
- FR-A- 2 620 958

## Beschreibung

Die Erfindung betrifft eine Maschine zur meßgesteuerten Bearbeitung von Werkstücken, insbesondere eine Honmaschine, nach dem Oberbegriff des Patentanspruches 1.

Derartige Maschinen mit zwei oder mehr Bearbeitungsstationen dienen zum gleichzeitigen Bearbeiten von zwei oder entsprechend vielen Werkstücken. Bei Honmaschinen werden beispielsweise die Bohrungen von mehreren Werkstücken gleichzeitig gehont. Dabei kann jedes Werkstück in der betreffenden Bearbeitungsstation auf Fertigmaß gehont werden. Es ist aber auch bekannt, eine solche Maschine, insbesondere eine Honmaschine, so einzurichten, daß jedes Werkstück die Bearbeitungsstationen durchläuft, so daß es in aufeinanderfolgenden Bearbeitungsstufen zunächst auf Zwischenmaße und in der letzten Bearbeitungsstation auf Fertigmaß bearbeitet wird. Bei solchen Honmaschinen haben die Honwerkzeuge in den aufeinanderfolgenden Bearbeitungsstationen zunehmend größere Durchmesser, um das jeweilige Zwischenmaß bzw. schließlich das Fertigmaß der Bohrung zu erreichen. Die Durchmesser der Honwerkzeuge sind in diesem Fall meist so gewählt, daß der Werkstoff pro Bohrung in gleichbleibenden Stufen abgetragen wird.

Die Werkzeuge müssen wegen des unvermeidlichen Verschleißes jeweils nach einer gewissen Betriebsdauer nachjustiert werden. Bei Honwerkzeugen muß zur Verschleißkompensation der Durchmesser nachgestellt werden. Die konventionellen Honwerkzeuge, die radial zustellbare Honleisten haben, können durch Nachstellen dieser Honleisten mittels des Zustellmechanismus im Durchmesser korrigiert werden. Solche Honwerkzeuge werden auch bei den erwähnten Honmaschinen mit stufenweiser Bearbeitung der Werkstücke verwendet. Vorzugsweise werden bei diesen Maschinen aber Dorn-Honwerkzeuge eingesetzt, deren Durchmesser ein bestimmtes Festmaß hat, und mit denen die jeweilige Bohrung in nur wenigen Hüben oder auch nur einem Hub bearbeitet wird. Der Durchmesser dieser Dorn-Honwerkzeuge ist aber nach Bedarf einstellbar, also auch korrigierbar und beispielsweise zur Verschleißkompensation nachstellbar.

Zur Verschleißkompensation und auch zur Korrektur von Bearbeitungsfehlern, die beispielsweise zu Ungenauigkeiten in der Bohrungsgeometrie führen, ist bei Honmaschinen und ähnlichen Bearbeitungsmaschinen eine Meßsteuerung vorgesehen. Hierfür sind an der Maschine Einrichtungen zum Nachmessen eines bearbeiteten Werkstückes vorhanden, in denen der gemessene Istwert des bearbeiteten Werkstückes, beispielsweise der Istwert des Durchmessers einer gehonten Bohrung, mit einem vorgegebenen Sollwert verglichen wird. Liegt die Differenz zwischen dem Istwert und dem Sollwert außerhalb einer vorgegebenen Toleranzgrenze, so wird in der betreffenden Bearbeitungsstation der Bearbeitungsvorgang und/oder das Bearbeitungswerkzeug nachgesteuert, ggf. also der Durchmesser des Werkzeuges nachgestellt. Diese Steuerung kann manuell ausgeführt werden, was jedoch spezielle Kenntnisse und Fertigkeiten erfordert sowie zeitaufwendig ist, insbesondere bei Maschinen mit mehreren Bearbeitungsstationen. Es sind darum auch schon Meßsteuerungen bekannt, bei denen die Nachmeßeinrichtung mit einer automatischen Steuerung gekoppelt ist, die der betreffenden Bearbeitungsstation zugeordnet ist. Für bekannte Maschinen (siehe z.B. die Zeitschrift "tz für Metallbearbeitung", 76. Jahrgang 1982, Heft 3/82, Seiten 15-22 oder die VDI-Zeitschrift 123 (1981) Nr. 15/16-August (I/II), Seiten 661-671) mit zwei oder mehr Bearbeitungsstationen ist hierfür pro Bearbeitungsstation eine Nachmeßstation vorgesehen, die mit der Bearbeitungsstation zur Steuerung gekoppelt ist. Diese Rückkopplungs-Steuerung veranlaßt beispielsweise über ein Zustellsystem das Nachstellen des Honwerkzeuges in der Bearbeitungsstation, die der Nachmeßstation vorgeordnet ist.

Das bedeutet bei einer Bearbeitungsmaschine, im betrachteten Ausführungsbeispiel also bei einer Honmaschine, einen erheblichen Aufwand, der umso größer ist, je mehr Bearbeitungsstationen vorgesehen sind, da entsprechend viele Vorrichtungen zum Messen und Steuern vorhanden sein müssen, was außerdem den Platzbedarf für die Maschine wesentlich erhöht.

Der Erfindung liegt die Aufgabe zugrunde, bei einer Maschine der gattungsgemäßen Art den Aufwand für die Meßsteuerung gering zu halten, ohne daß die Bearbeitungsgenauigkeit beeinträchtigt wird.

Die Aufgabe wird gemäß der Erfindung mit den kennzeichnenden Merkmalen des Patentanspruches 1 gelöst.

Bei der erfindungsgemäßen Maschine dient eine Meßstation zum Nachmessen der Werkstücke aus zwei oder mehr Bearbeitungsstationen, was im Vergleich zu den bekannten Maschinen eine wesentliche Einsparung bedeutet. Die bearbeiteten Werkstücke können aus den verschiedenen Bearbeitungsstationen aufeinanderfolgend der Nachmeßeinrichtung in der Meßstation zugeführt werden, so daß sich ein Meßzyklus ergibt, in dem die Werkstücke nacheinander gemessen und die Meßergebnisse einzeln ausgewertet werden können. Hierfür ist die Meßstation mit jeder der betreffenden Bearbeitungsstationen zur Meßsteuerung gekoppelt, so daß bei einer Abweichung von dem jeweils vorgegebenen Sollmaß ein Nachstellen des Werkzeuges und/oder eine Korrektur des Bearbeitungsvorganges möglich ist. Dieses Nachstellen bzw. Korrigieren ist grundsätzlich manuell möglich, wird aber vorzugsweise automatisch ausgeführt, wofür dann eine geeignete Rückkopplungs-Steuerung vorgesehen ist.

Nach einer bevorzugten Ausführungsform hat eine erfindungsgemäß ausgebildete Honmaschine mehrere, beispielsweise sechs Bearbeitungsstationen, in denen die Werkstücke in aufeinanderfolgenden Stufen bis zum Fertigmaß bearbeitet werden, und der letzten Bearbeitungsstation ist die Meßstation nachgeordnet. Die Werkstücke werden von einer Aufnahme- und Fördereinrichtung, die zweckmäßig als Rundtisch ausgebildet ist, schrittweise nach einem vorgegebenen Arbeitstakt von einer zur nächsten Bearbeitungsstation und schließlich zur Meßstation befördert. Dieser Meßstation ist ein ebenfalls schrittweise drehbares Magazin für Meßdorne unterschiedlichen Durchmessers zugeordnet, die entsprechend dem jeweils vorgegebenen Sollmaß aufeinanderfolgend in die Meßstation eingefahren werden, wenn ein Meßzyklus ablaufen soll. Während dieser zyklischen Messung ist die Bearbeitung unterbrochen. Die Meßstation dient aber außerdem dazu, während der laufenden Bearbeitung das jeweils auf Fertigmaß bearbeitete Werkstück zu überprüfen, so daß in den Pausen während des zyklischen Bearbeitungsvorganges eine Nachstellung des Werkzeugdurchmessers und/oder eine Korrektur des Bearbeitungsvorganges in der letzten Bearbeitungsstation ausgeführt werden kann. Die so veranlaßte Nachstellung des Werkzeugdurchmessers kann je nach der gemessenen Abweichung vom Sollwert als Signal dafür ausgewertet werden, daß ein Meßzyklus und damit eine Unterbrechung des Arbeitszyklus eingeleitet wird. Die Anzahl der Meßdorne in dem Magazin kann der Anzahl der Bearbeitungsstationen entsprechen, jedoch ist dies nicht unbedingt erforderlich, wenn die Sollwerte für zwei oder mehr aufeinanderfolgende Bearbeitungsstationen nicht wesentlich voneinander abweichen. Es kann dann ein bestimmter Meßdorn für mehrere dieser Sollwerte verwendet werden, wobei die Meßeinrichtung zur elektronischen Korrektur der Durchmesserdifferenzen eingerichtet ist.

Weitere Merkmale der Erfindung ergeben sich aus den Unteransprüchen und der folgenden Beschreibung eines in den Zeichnungen dargestellten Ausführungsbeispieles einer Honmaschine. Es zeigen in schematischer Darstellung
- Fig. 1: eine Honmaschine mit mehreren Arbeitsspindeln und Bearbeitungsstationen sowie einer Meßstation in Seitenansicht,
- Fig. 2: die Honmaschine nach Fig. 1 in Draufsicht auf die Bearbeitungsstationen und die Meßstation.

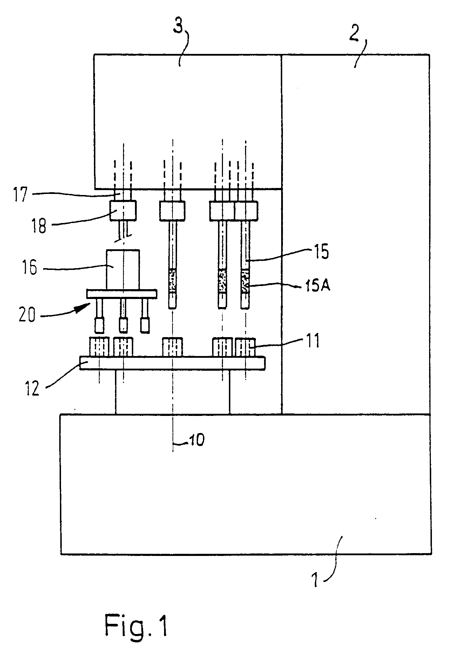

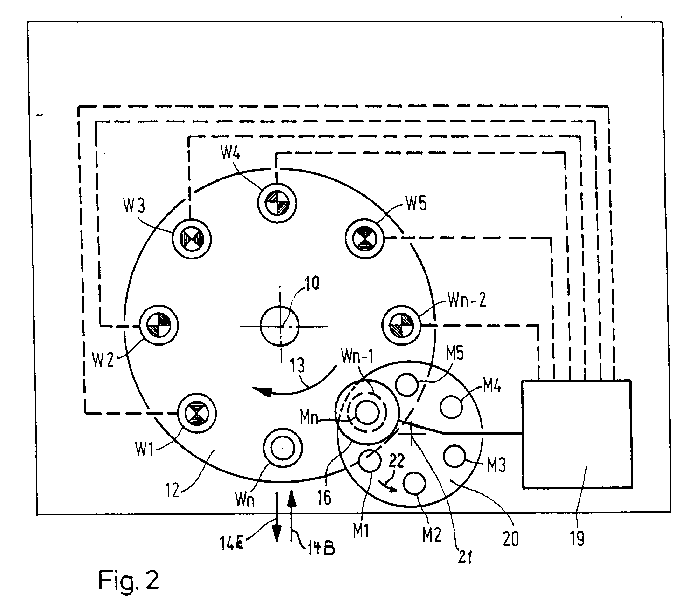

Fig. 1 zeigt schematisch in Seitenansicht die Honmaschine mit einem Fundament 1 und einem Ständer 2, an dessen vorkragendem Kopfteil 3 mehrere Arbeitsspindeln 17 gelagert sind. Unterhalb des Kopfstückes 3 ist auf dem Fundament 1 ein Tisch 12 gelagert, der als Rundtisch ausgeführt und um eine Achse 10 in Richtung des Pfeiles 13 (Fig. 2) drehbar ist. Auf dem Rundtisch befinden sich mehrere Stationen W1 bis Wn (Fig. 2), denen je eine (nicht dargestellte) Werkstück-Aufnahmevorrichtung für Werkstücke 11 (Fig. 1) zugeordnet ist. Diese Stationen und die Werkstück-Aufnahmevorrichtungen sind mit ihren Mittelachsen auf einem zur Drehachse 10 des Tisches 12 konzentrischen Kreis angeordnet. Im Ausführungsbeispiel sind acht Stationen vorgesehen, so daß n = 8 ist, wobei sechs Stationen, nämlich die Stationen W1 bis Wn-2 als Bearbeitungsstationen vorgesehen sind, denen je eine der Arbeitsspindeln 17 in koaxialer Lage zugeordnet ist. Die Station Wn, im Ausführungsbeispiel also die achte Station, dient zum Beladen und Entladen des Tisches 12, wobei die noch unbearbeiteten Werkstücke 11 in Richtung des Pfeiles 14B in die Station Wn eingesetzt und die fertig bearbeiteten Werkstücke in Richtung des Pfeiles 14E aus dieser Station entnommen werden. Die Station Wn-1, also die siebente Station, ist eine Meßstation zum Nachmessen der Werkstücke.

Die Arbeitsspindeln 17 haben je eine Halterung 18 für ein Werkzeug 15. Im Ausführungsbeispiel sind Dorn-Honwerkzeuge 15 vorgesehen, deren Schleifbelag 15A einen vorgegebenen Durchmesser hat, wobei dieses Festmaß zur Kompensation von Verschleiß nachstellbar ist. Jedes dieser Dorn-Honwerkzeuge 15 bearbeitet die Bohrung des in der zugehörigen Bearbeitungsstation befindlichen Werkstückes 11 in nur wenigen Hüben oder auch in nur einem Hub, wobei das Werkzeug um seine zur Bohrungsachse koaxiale Achse gedreht und zugleich axial durch die Bohrung hindurch-geführt wird. Die in Drehrichtung 13 des Tisches aufeinanderfolgenden Dorn-Honwerkzeuge haben jeweils einen größeren Durchmesser des Schleifbelages als das vorangehende Werkzeug, und jedes Werkstück 11 wird in aufeinanderfolgenden Schritten von jedem der Werkzeuge 15 bearbeitet, bis in der letzten Bearbeitungsstation Wn-2 das Fertigmaß der Bohrung erreicht ist. Für diese aufeinanderfolgende Bearbeitung wird der Tisch 12 taktweise jeweils um einen Winkel gedreht, der mit dem Zentriwinkel zwischen zwei aufeinanderfolgenden Bearbeitungsstationen übereinstimmt.

Das in der Bearbeitungsstation Wn-2 auf Fertigmaß bearbeitete Werkstück wird bei der folgenden Drehung des Tisches 12 in die Meßstation Wn-1 befördert. Die Meßstation enthält eine Nachmeßeinrichtung 16, mit der das Fertigmaß des Werkstückes in bekannter Weise mittels eines Meßdornes Mn ermittelt wird. Das Meßergebnis wird einem an die Meßstation 16 angeschlossenen Meß-Steuergerät 19 zugeführt. Hier wird der Meßwert mit einem gespeicherten Sollwert für das Fertigmaß verglichen. Liegt der Meßwert außerhalb einer vorgegebenen Toleranzgrenze, so wird die Abweichung von dem Sollwert angezeigt. Das Dorn-Honwerkzeug der Bearbeitungsstation Wn-2 wird manuell oder automatisch nachgestellt, wenn der Meßwert außerhalb der Toleranzgrenzen liegt.

Der Nachmeßeinrichtung 16 in der Meßstation Wn-1 ist ein Wechselmagazin 20 zugeordnet. Das Magazin enthält eine der Anzahl der Bearbeitungsstationen W1 bis Wn-2 entsprechende Anzahl von Meßdornen M1 bis Mn. Im Ausführungsbeispiel sind also sechs Meßdorne vorgesehen, die hinsichtlich des Bohrungs-Sollmaßes je einer der Bearbeitungsstationen zugeordnet sind. Das Meßdorn-Wechselmagazin 20 ermöglicht es, in der Meßstation Wn-1 die in den einzelnen Bearbeitungsstationen W1 bis Wn-2 erreichten Bohrungsmaße im Vergleich zu einem jeweiligen Sollwert zu überprüfen. Hierfür wird der Arbeitszyklus unterbrochen und ein Meßzyklus eingeleitet, bei dem der Werkstückaufnahme-Tisch 12 schrittweise gedreht wird, so daß die Werkstücke aus den Bearbeitungsstationen W1 bis Wn-2 aufeinanderfolgend in die Meßstation Wn-1 befördert werden. Es werden also nacheinander sechs Werkstücke gemessen, die entsprechend den Bearbeitungsstufen in den Stationen W1 bis Wn-2 von den zugehörigen Dorn-Honwerkzeugen 15 unterschiedliche Bohrungsdurchmesser erhalten haben. Den Sollmaßen dieser Durchmesser entsprechen die Meßdorne M1 bis Mn. Dementsprechend wird das Wechselmagazin 20 um seine Mittelachse 21 in Richtung des Pfeiles 22 schrittweise gedreht, in Übereinstimmung mit der schrittweisen Fortschaltung des Werkstückaufnahme-Tisches 12, so daß sich in der Nachmeßeinrichtung 16 jeweils ein Meßdorn befindet, der dem Soll-Bohrungsmaß der zugehörigen Bearbeitungsstation entspricht, aus der das in der Nachmaßstation befindliche Werkstück stammt.

Die Meßdorne M1 bis Mn werden wie üblich auf das jeweilige Sollmaß geeicht, beispielsweise mittels Einstellringen, wobei zur automatischen Nullpunkteinstellung Speicherwerte in das Meß-Steuergerät 19 eingegeben sein können. Sofern die Sollmaße der Bohrungen für zwei oder mehr aufeinanderfolgende Bearbeitungsstationen nur geringfügig voneinander abweichen, kann zum Nachmessen der erreichten Istwerte derselbe Meßdorn verwendet werden, wobei die Differenzen der Sollwerte in dem Meß-Steuergerät elektronisch erfaßt und für die Messung ausgewertet werden.

Den Bearbeitungsstationen W1 bis Wn-2 ist je eine von sechs Steuerleitungen zugeordnet, die von dem Meß-Steuergerät 19 ausgehen und in Fig. 2 strichliert angedeutet sind. Ergibt sich bei der Nachmessung eine über die vorgegebene Toleranzgrenze hinausgehende Abweichung des Meßwertes von dem zugehörigen gespeicherten Sollwert, so wird in der Bearbeitungsstation, die dem betreffenden Sollmaß zugeordnet ist, das betreffende Honwerkzeug 15 über die zugehörige Steuerleitung automatisch nachgestellt.

Die beschriebene Meßsteuerung kann selbstverständlich auch angewendet werden, wenn statt der Dorn-Honwerkzeuge andere Honwerkzeuge eingesetzt werden, beispielsweise konventionelle Werkzeuge mit zustellbaren Honleisten, die ebenfalls eine stufenweise Bearbeitung von Werkstücken in aufeinanderfolgenden Arbeitsschritten innerhalb eines Arbeitszyklus erlauben.

Nach Beendigung des Meßzyklus werden die gemessenen Werkstücke durch Drehen des Tisches 12 wieder in ihre Ausgangslage gebracht, und der unterbrochene Arbeitszyklus kann dann fortgesetzt werden. Liegt das Fertigmaß eines Werkstückes außerhalb einer zulässigen Toleranz, so wird dieses Werkstück nach der Entnahme aus der Station Wn ausgeschieden.

Die Einschaltung eines Meßzyklus kann in Abhängigkeit von verschiedenen Faktoren gewählt werden. So kann ein Meßzyklus automatisch oder von Hand ausgelöst werden, wenn aufgrund einer innerhalb des Bearbeitungszyklus ausgeführten Einzelmessung des in der Station Wn-2 fertig bearbeiteten Werkstückes eine Nachstellung des Honwerkzeuges dieser Station erforderlich war. Es kann aber auch statt dessen oder zusätzlich jeweils nach Bearbeitung einer vorgegebenen Anzahl von Werkstücken oder nach Ablauf einer vorgegebenen Zeit der Meßzyklus eingeschaltet werden, wobei also der Arbeitszyklus unterbrochen wird.

## Patentansprüche

1. Maschine zur meßgesteuerten Bearbeitung von Werkstücken (11), insbesondere Honmaschine, mit zwei oder mehr Bearbeitungsstationen (W1 bis Wn-2) und Einrichtungen (Wn-1, 16, 20) zum Nachmessen der bearbeiteten Werkstücke (11),
dadurch gekennzeichnet, daß mindestens zwei Bearbeitungsstationen (W1 bis Wn-2) eine gemeinsame Meßstation (Wn-1) zugeordnet ist, die eine Nachmeßeinrichtung (16) enthält und in zeitlicher Aufeinanderfolge mit bearbeiteten Werkstücken (11) aus diesen Bearbeitungsstationen (W1 bis Wn-2) zu beschicken sowie mit jeder dieser Bearbeitungsstationen (W1 bis Wn-2) zur Meßsteuerung gekoppelt ist.

2. Maschine nach Anspruch 1,
dadurch gekennzeichnet, daß die Bearbeitungsstationen (W1 bis Wn-2) zur schrittweise aufeinanderfolgenden Bearbeitung jedes Werkstückes (11) bis zu dessen Fertigmaß eingerichtet sind.

3. Maschine nach Anspruch 1 oder 2,
dadurch gekennzeichnet, daß die Nachmeßeinrichtung (16) auf unterschiedliche Sollwerte des Werkstück-Maßes einstellbar ist.

4. Maschine nach einem der Ansprüche 1 bis 3,
dadurch gekennzeichnet, daß den Bearbeitungsstationen (W1 bis Wn-2) und der Meßstation (Wn-1) eine gemeinsame Aufnahme- und Fördereinrichtung (12) zur Halterung der Werkstücke (11) und deren Förderung zur jeweils nächsten Station (W1 bis Wn) zugeordnet ist, und daß die Aufnahme- und Fördereinrichtung (12) für einen Arbeitszyklus und für einen Meßzyklus jeweils schrittweise fortschaltbar ist, wobei der Arbeitszyklus während eines Meßzyklus unterbrochen ist.

5. Maschine nach den Ansprüchen 3 und 4,
dadurch gekennzeichnet, daß die Nachmeßeinrichtung (16) entsprechend dem Meßzyklus umsteuerbar ist.

6. Maschine nach einem der Ansprüche 1 bis 5,
dadurch gekennzeichnet, daß der Meßstation (Wn-1) ein Magazin (20) für verschiedene Meßfühler, insbesondere Meßdorne (M1 bis Mn), zugeordnet ist, die durch Fortschalten des Magazins wahlweise in die Nachmeßeinrichtung (16) einsetzbar sind, wobei jeweils ein Meßfühler dem Sollwert des Bearbeitungsmaßes einer Bearbeitungsstation (W1 bis Wn-2) entspricht oder auf die Sollwerte von zwei oder mehr aufeinanderfolgenden Bearbeitungsstationen (W1 bis Wn-2) meßtechnisch einzustellen ist.

7. Maschine nach den Ansprüchen 4 und 6,
dadurch gekennzeichnet, daß die Aufnahme- und Fördereinrichtung ein drehbarer Rundtisch (12) ist, auf dem die Werkstückhalterungen jeweils unterhalb der Stationen (W1 bis Wn) in gleichen Abständen voneinander und mit ihren Mittelpunkten auf einem Kreis angeordnet sind, der zur Drehachse (10) des Rundtisches (12) konzentrisch ist, daß das Magazin (20) um eine zur Achse (10) des Rundtisches (12) exzentrische und nahe der Meßstation (Wn-1) befindliche Achse (21) drehbar ist und die Halterungen für die Meßfühler bzw. Meßdorne (M1 bis Mn) mit ihren Mittelachsen auf einem zur Drehachse (21) des Magazins (20) konzentrischen Kreis liegen und einen derartigen Abstand voneinander haben, daß die Meßfühler bzw. Meßdorne (M1 bis Mn) durch schrittweises Drehen des Magazins (20) aufeinanderfolgend in die Meßstation (Wn-1) einfahrbar sind.

8. Maschine nach einem der Ansprüche 1 bis 7,
dadurch gekennzeichnet, daß an die Meßstation (Wn-1) ein elektronisches Meß- und Steuergerät (19) angeschlossen ist, in dem die den Bearbeitungsstationen (W1 bis Wn-2) zugeordneten Sollwerte des jeweiligen Werkstückmaßes zu speichern sind, und das zur Auswahl des Sollwertes für das jeweilige in der Meßstation (Wn-1) befindliche Werkstück (11), zum Vergleichen des Sollwertes mit dem gemessenen Istwert und zur Signalgabe entsprechend dem Meßergebnis des Vergleichs eingerichtet ist, und daß in Abhängigkeit von dem erzeugten Signal der Bearbeitungsvorgang in der betreffenden Bearbeitungsstation steuerbar und/oder das dort befindliche Bearbeitungswerkzeug (15) nachstellbar ist.

9. Maschine nach Anspruch 8,
dadurch gekennzeichnet, daß der Bearbeitungsvorgang und/oder das Nachstellen des Bearbeitungswerkzeuges (15) manuell steuerbar sind.

10. Maschine nach Anspruch 8,
dadurch gekennzeichnet, daß das Meß- und Steuergerät (19) zum automatischen Nachsteuern der Bearbeitungsvorgänge und/oder zum automatischen Nachstellen der Bearbeitungswerkzeuge (15) mit den Bearbeitungsstationen (W1 bis Wn-2) über Steuerleitungen gekoppelt ist.

11. Maschine nach einem der Ansprüche 1 bis 10,
dadurch gekennzeichnet, daß ein Meßzyklus zum aufeinanderfolgenden Messen von zwei oder mehr Werkstücken (15) manuell einschaltbar ist.

12. Maschine nach einem der Ansprüche 1 bis 11,
dadurch gekennzeichnet, daß die Bearbeitung und die Messung der Werkstücke (11) derart automatisch gesteuert sind, daß jeweils ein Meßzyklus ausgelöst wird in Abhängigkeit von einer vorgegebenen Anzahl bearbeiteter Werkstücke oder einer vorgegebenen Betriebsdauer und/oder in Abhängigkeit von einer während des Bearbeitungszyklus durch eine Einzelmessung in der Meßstation (Wn-1) ausgelösten meßgesteuerten Korrektur eines Bearbeitungsvorganges und/oder eines Bearbeitungswerkzeuges.

## Claims

1. Machine for the size-controlled machining of workpieces (11), in particular a honing machine, with two or more machining stations (W1 to Wn-2) and devices (Wn-1, 16, 20) for remeasuring the machined workpieces (11), characterised in that a common measuring station (Wn-1) is associated with at least two machining stations (W1 to Wn-2), which measuring station contains a remeasuring device (16) and is to be supplied in timed sequence with machined workpieces (11) from these machining stations (W1 to Wn-2) and is connected to each of these machining stations (W1 to Wn-2) for size control.

2. Machine according to Claim 1, characterised in that the machining stations (W1 to Wn-2) are set up for the stepwise successive machining of each workpiece (11) to its finished size.

3. Machine according to Claim 1 or 2, characterised in that the remeasuring device (16) can be adjusted to different reference values of the workpiece dimension.

4. Machine according to one of Claims 1 to 3, characterised in that associated with the machining stations (W1 to Wn-2) and the measuring station (Wn-1) is a common receiving and conveying device (12) for mounting the workpieces (11) and their conveyance to the respective next station (W1 to Wn), and that the receiving and conveying device (12) can be switched on stepwise for a working cycle and for a measuring cycle, the working cycle being interrupted during a measuring cycle.

5. Machine according to Claims 3 and 4, characterised in that the remeasuring device (16) can be reversed corresponding to the measuring cycle.

6. Machine according to one of Claims 1 to 5, characterised in that associated with the measuring station (Wn-1) is a magazine (20) for different measuring sensors, in particular measuring mandrels (M1 to Mn), which by switching on the magazine can be inserted selectively in the remeasuring device (16), respectively one measuring sensor corresponding to the reference value of the machining dimension of a machining station (W1 to Wn-2) or can be adjusted as regards measuring technique to the reference values of two or more successive machining stations (W1 to Wn-2).

7. Machine according to Claims 4 and 6, characterised in that the receiving and conveying device is a rotary round table (12), on which the workpiece mountings are respectively located below the stations (W1 to Wn) at equal distances apart and with their centre points on a circle, which is concentric with respect to the axis of rotation (10) of the round table (12), that the magazine (20) is able to rotate about an axis (21) eccentric with respect to the axis (10) of the round table (12) and located close to the measuring station (Wn-1) and the mountings for the measuring sensors or measuring mandrels (M1 to Mn) lie with their centre axes on a circle concentric with respect to the axis of rotation (21) of the magazine (20) and are at such a distance from each other that the measuring sensors or measuring mandrels (M1 to Mn) can be moved in succession into the measuring station (Wn-1) by stepwise rotation of the magazine (20).

8. Machine according to one of Claims 1 to 7, characterised in that connected to the measuring station (Wn-1) is an electronic measuring and control apparatus (19), in which the reference values of the respective workpiece dimension associated with the machining stations (W1 to Wn-2) are to be stored and which is set up for the selection of the reference value for the respective workpiece (11) located in the measuring station (Wn-1), for the comparison of the reference value with the measured actual value and for the emission of a signal corresponding to the measurement result of the comparison, and that the machining operation in the respective machining station can be controlled depending on the signal produced and/or the machining tool (15) located there can be reset.

9. Machine according to Claim 8, characterised in that the machining operation and/or the resetting of the machining tool (15) can be controlled manually.

10. Machine according to Claim 8, characterised in that for the automatic subsequent control of the machining operations and/or for the automatic resetting of the machining tools (15), the measuring and control apparatus (19) is connected by way of control leads to the machining stations (W1 to Wn-2).

11. Machine according to one of Claims 1 to 10, characterised in that a measuring cycle for the successive measuring of two or more workpieces (15) can be initiated manually.

12. Machine according to one of Claims 1 to 11, characterised in that the machining and the measurement of the workpieces (11) are controlled automatically so that in each case a measuring cycle is initiated depending on a predetermined number of machined workpieces or a predetermined operating time and/or depending on a size-controlled correction of a machining operation and/or of a machining tool, initiated during the machining cycle by an individual measurement in the measuring station (Wn-1).

## Revendications

1. Machine pour l'usinage commandé sur la base de la mesure de pièces (11), notamment machine à roder, comprenant deux ou plus de deux postes de travail (W1 à Wn-2) et des dispositifs (Wn-1, 16, 20) pour la mesure aval des pièces (11) usinées,
caractérisée en ce qu'à au moins deux postes d'usinage (W1 à Wn-2), est associé un poste de mesure commun (Wn-1) qui comprend un dispositif de mesure aval (16) et doit recevoir, dans une succession dans le temps, les pièces (11) usinées provenant de ces postes de travail (W1 à Wn-2) et est couplé pour la commande par la mesure à chacun de ces postes de travail (W1 à Wn-2).

2. Machine selon la revendication 1,
caractérisée en ce que les postes d'usinage (W1 à Wn-2) sont agencés pour l'usinage successif, pas-à-pas, de chaque pièce (11), jusqu'à sa cote finie.

3. Machine selon la revendication 1 ou 2,
caractérisée en ce que le dispositif de mesure aval (16) peut être réglé sur différentes valeurs de consigne de la cote des pièces.

4. Machine selon une des revendications 1 à 3,
caractérisée en ce qu'aux postes d'usinage (W1 à Wn-2) et au poste de mesure (Wn-1) est associé un dispositif commun (12) de réception et de transfert destiné à tenir les pièces (11) et à les transférer au poste suivant (W1 à Wn) et en ce que le dispositif de réception et de transfert (12) peut être avancé pas-à-pas pour un cycle de travail et pour un cycle de mesure, le cycle de travail étant interrompu pendant un cycle de mesure.

5. Machine selon les revendications 3 et 4,
caractérisée en ce que le dispositif de mesure aval (16) peut être converti en fonction du cycle de mesure.

6. Machine selon une des revendications 1 à 5,
caractérisée en ce qu'au poste de mesure (Wn-1) est associé un magasin (20) servant à contenir plusieurs palpeurs de mesure, en particulier des tampons à limites (M1 à Mn) qui peuvent être sélectivement mis en oeuvre dans le dispositif de mesure aval (16) par l'avance du magasin, et un palpeur de mesure considéré correspond à la valeur de consigne de la cote d'usinage d'un poste d'usinage donné (W1 à Wn-2) ou peut être ajusté, par une technique de mesure, sur les valeurs de consigne de deux ou plus de deux postes d'usinage successifs (W1 à Wn-2).

7. Machine selon les revendications 4 et 6,
caractérisée en ce que le dispositif de réception et de transfert est une table circulaire tournante (12) sur laquelle les montures de pièces sont disposées respectivement au-dessous des postes (W1 à Wn) à des écartements mutuels identiques et de façon que leurs centres soient disposés sur un cercle qui est centré sur à l'axe de rotation (10) de la table circulaire (12), en ce que le magasin (20) peut être entraîné en rotation autour d'un axe (21) qui se trouve dans le voisinage du poste de mesure (Wn-1) et qui est excentré par rapport à l'axe (10) de la table circulaire (12), et les montures recevant les palpeurs de mesure ou tampons à limites (M1 à Mn) sont disposées avec leurs axes médians sur un cercle centré sur l'axe de rotation (21) du magasin (20) et ont un écartement mutuel tel que les palpeurs de mesure ou les tampons à limites (M1 à Mn) puissent être introduits successivement dans le poste de mesure (Wn-1) par une rotation pas-à-pas du magasin (20).

8. Machine selon une des revendications 1 à 7,
caractérisée en ce qu'au poste de mesure (Wn-1) est connecté un appareil de mesure et de commande électronique (19) dans lequel les valeurs de consigne de la cote considérée de la pièce, qui correspondent aux postes de travail (W1 à Wn-2) doivent être mémorisées et qui est agencé pour sélectionner la valeur de consigne imposée pour la pièce considérée (11) qui se trouve dans le poste de mesure (Wn-1), pour comparer la valeur de consigne à la valeur réelle mesurée et pour émettre un signal en fonction du résultat de mesure de la comparaison, et en ce qu'en fonction du signal produit, l'opération d'usinage peut être commandée dans le poste d'usinage correspondant et/ou l'outil d'usinage (15) qui se trouve à cet endroit peut être réajusté.

9. Machine selon la revendication 8,
caractérisée en ce que l'opération d'usinage et/ou le réajustement de l'outil d'usinage (15) peuvent être commandés manuellement.

10. Machine selon la revendication 8,
caractérisée en ce que l'appareil de mesure et de commande (19) servant à la correction automatique des opérations d'usinage et/ou au réajustement automatique des outils d'usinage (15) est couplé aux postes d'usinage (W1 à Wn-2) par des lignes de commande.

11. Machine selon une des revendications 1 à 10,
caractérisée en ce qu'un cycle de mesure servant à mesurer successivement deux ou plus de deux pièces (15) peut être déclenché manuellement.

12. Machine selon une des revendications 1 à 11,
caractérisée en ce que l'usinage et la mesure des pièces (11) sont commandés automatiquement de manière qu'un cycle de mesure soit déclenché en fonction d'un nombre prédéterminé de pièces usinées ou d'une durée de service prédéterminée et/ou en fonction d'une correction d'une opération d'usinage et/ou d'un outil d'usinage, commandée en fonction de la mesure et déclenchée par une mesure individuelle exécutée dans le poste de mesure (Wn-1).
